# FASCICULE DE BREVET EUROPEEN

(11) **EP 1 464 626 B1**
(45) Date de publication et mention de la délivrance du brevet: **18.11.2009**
(21) Numéro de dépôt: 04290830.1
(22) Date de dépôt: 29.03.2004
(51) Int. Cl.: C02F 3/34

(54) **Procédé de traitement des effluents agroalimentaires et industriels comportant une phase de biodigestion par des champignons filamenteux**
Verfahren zur Behandlung von Abwässern aus der Landwirtschaft- und Lebensmittelindustrie und Industrieabwässern, die eine Biogärung mit fadenförmigen Pilzen umfasst
Process for the treatment of effluents from the food and agriculture industry and industrial effluents, comprising biodigestion by filamentous fungi

(30) Priorité: 28.03.2003 FR 0303880
(43) Date de publication de la demande: 06.10.2004
(73) Titulaire: Biovitis S.A., 15400 Saint-Etienne-De-Chomeil (FR)
(72) Inventeur: Berthon, Jean-Yves, 69170 Perignat Les sarlieve (FR); Grizard, Damien, 63000 Clermont-Ferrand (FR)
(74) Mandataire: Guerre, Dominique

(56) Documents cités:
- WO-A-02/065836
- US-A- 3 737 374
- US-A- 4 863 862
- US-A- 5 459 065
- CHRISTENSEN L H ET AL: "Continuous cultivation of Penicillium chrysogenum. Growth on glucose and penicillin production" JOURNAL OF BIOTECHNOLOGY, ELSEVIER SCIENCE PUBLISHERS, AMSTERDAM, NL, vol. 42, no. 2, 29 septembre 1995 (1995-09-29), pages 95-107, XP004036906 ISSN: 0168-1656
- ARNOLD J L ET AL: "The use of yeasts to reduce the polluting potential of silage effluent" WATER RESEARCH, ELSEVIER SCIENCE PUBLISHERS, AMSTERDAM, NL, vol. 34, no. 15, 15 octobre 2000 (2000-10-15), pages 3699-3708, XP004213981 ISSN: 0043-1354

## Description

La présente invention a trait au domaine du traitement des effluents industriels ou agroalimentaires.

La plupart des rejets industriels ou agroalimentaires d'effluents liquides susceptibles d'altérer la qualité des eaux sont réglementés dans le cadre de la législation relative aux installations classées pour la protection de l'environnement. L'objectif de cette réglementation est la préservation des risques et incidences environnementales, de toute nature, liés à ces activités.

A l'heure actuelle, la plupart des usines des secteurs agroalimentaires ou industriels disposent de systèmes de traitement de leurs effluents. Il s'agit le plus souvent de stations d'épuration biologique propres (procédé qui consiste à mélanger l'effluent avec une masse ou boues biologiques qui sont formées au cours du traitement par les bactéries épuratrices endogènes) ou par lagunage (procédé d'épuration biologique où l'effluent séjourne un temps assez long, de quelques jours à plusieurs mois, dans des étangs de stabilisation ou lagunes naturels ou artificiels). Dans tous les cas, ces traitements génèrent inévitablement des boues, c'est-à-dire des résidus semi-solides correspondant à la biomasse endogène épuratrice nouvellement formée et aux matières organiques inertes non dégradées.

Cette matière organique constitue en elle-même une source de pollution qui n'est pas a fortiori éliminée par les procédés existants puisque les procédés de traitements actuels par l'application de phases de digestion par des microorganismes produisent en eux-mêmes des boues constituées essentiellement de matières organiques.

On connaît de WO 92/11210 un procédé de digestion d'effluents agroalimentaires riches en glucides et en alcool comportant deux phases dont une phase anaérobie indispensable au fonctionnement du procédé et mettant en oeuvre des cultures fixées (sur un support solide) de microorganismes bactériens et/ou fongiques anaérobies et/ou aérobies.

Outre que ce procédé nécessite la mise en place d'installations spécifiques, ce procédé n'est applicable qu'à des déchets prétraités.

On connaît de FR 2 815 028 et de FR 2 796 376 un procédé de traitement de lisier ou effluent d'élevage mettant en oeuvre des champignons filamenteux. Outre que ceux-ci requièrent également des installations spécifiques et/ou dédiées, les procédés mis en oeuvre sont destinés à abaisser la DCO (Demande Chimique en Oxygène) et en raison de la succession des phases de digestion aérobie et anaérobie ceux-ci génèrent de la matière organique, classiquement appelée boue d'épuration.

On connaît de FR2359081 l'utilisation de souches particulières de champignons filamenteux ayant un aspect floculant permettant la récupération et la valorisation de la biomasse.

On connaît de Arnold J. L. et al. , Water Research, ELSEVIER SCIENCE, Vol 34, n° 15, l'utilisation de Galactomyces geotrichum pour abaisser la demande chimique en oxygène et la teneur en matière organique des effluents d'ensilage.

Dans tous les procédés décrits lorsque des champignons filamenteux sont mis en oeuvre, soit les effluents doivent être prétraités de façon spécifique (autoclavage par exemple), modification chimique soit les installations doivent être modifiées de façon à permettre ce traitement.

De plus l'idée de valorisation prédomine, il s'agit par exemple de produire des polymères, des hydrocarbures à partir des déchets et non de s'orienter vers la simple élimination sous forme de H₂O et de CO₂, et il n s'agit pas de procédés de réduction de la matière organique mais de procédés de transformation.

La présente invention concerne un procédé selon la revendication 1.

Le procédé selon l'invention est continu.

Il s'agit d'un procédé d'optimisation des procédés d'épuration existants par la mise en oeuvre d'une étape de biodigestion par des champignons filamenteux en culture libre en présence d'oxygène.

Le procédé de l'invention comporte :
a) une étape de caractérisation chimique de l'effluent,
b) une étape de sélection des souches de champignons filamenteux permettant de maintenir une population viable desdits champignons filamenteux dans les effluents,
c) une étape d'ensemencement du milieu par un inoculum fongique comprenant au moins une des souches de champignons filamenteux sélectionnée à l'étape b,
d) une étape de biodigestion par lesdits champignons filamenteux en culture libre en présence d'oxygène.

L'un des avantages du procédé selon l'invention est qu'il permet d'améliorer les performances des systèmes épuratoires existants.

L'ajout de l'inoculum constitué d'une biomasse fongique sous forme liquide ou solide permet d'une part de limiter le rejet de pollution vers les milieux naturels (sol, air et milieux aquatiques) et d'autre part de réduire le volume des boues biologiques activées issues de la flore endogène. Les champignons ou mycètes sont capables de dégrader une très grande variété de composés organiques. Par conséquent, ils accélèrent le processus épuratoire déjà mis en place dans les stations biologiques et les lagunes et abaissent les teneurs en substances organiques inertes ou normalement non biodégradables par la flore endogène. Ils vont aussi attaquer la fraction organique correspondant à l'excès de boues inévitablement produites lors de l'épuration biologique classique.

Ainsi un autre des avantages du procédé selon l'invention consiste en une diminution du coût de gestion des boues résiduaires des systèmes épuratoires existants, coûts liés à l'épandage à la déshydratation, l'incinération et/ou le stockage.

En plus des abattements de DCO, DBO, MES et MVS le système épuratoire a également pour objectif la réduction des charges en azote de l'effluent. En effet, l'azote, quel que soit sa nature chimique, constitue à terme, la principale source de nitrates polluants. Les champignons filamenteux peuvent agir directement au niveau de cet abaissement de la charge azotée car ils possèdent souvent la propriété de nitrifier (azote organique ou ammonium transformés en NO₃ ou NO₂) et de dénitrifier NO₂ en N₂ azote atmosphérique inerte), voir de co-dénitrifier (utilisation d'une source d'azote différente de NO2 pour produire N2).

Par rapport à un système bactérien classique de nitrification dénitrification déjà en place dans une station d'épuration, les mycètes permettent une meilleure stabilité du système car un seul microorganisme en l'occurrence un champignon réalise la chaîne de réactions chimiques, alors qu'avec un système basé sur des bactéries, il faut impérativement l'intervention de plusieurs populations ayant des optima de croissance différents pour effectuer ces réactions, par exemple action combinées de Nitrosomonas, Nitrobacter ....De plus les mycètes sont moins sensibles aux taux de toxiques, par exemple les métaux lourds ou aux fortes concentrations en ammonium qui inhibent les systèmes bactériens. La co-nitrification est également un élément qui agit favorablement sur la sécurité du système par exemple en raison de la conversion directe en azote de molécules portant des fonctions azide ou d'autres molécules azotées organiques, normalement inhibitrices de bactéries.

L'emploi d'un inoculum fongique comprenant au moins une des souches de champignons filamenteux sélectionnée en fonction du milieu, c'est-à-dire permettant de maintenir une population viable dans les effluents à traiter, permet la mise en oeuvre du procédé sans avoir recours à des installations spécifiques mais simplement par ensemencement d'installations existantes, cuves de traitement aérobie ou lagunes existantes.

Dans un mode de réalisation préféré, l'étape de biodigestion à une durée minimum de 4 jours.

Les champignons filamenteux sont choisis parmis les espèces suivantes :
- Aspergillus phoenicis
- Chaetomium globotosum
- Galactomyces geotrichum
- Mucor hiemalis
- Paecilomyces variotii
- Fusarium equiseti
- Phoma sp.
- Trichoderma viride
- Penicillium chrysogenum

Les souches correspondant aux dites espèces mises en oeuvre dans le procédé ou comprises dans l'inoculum fongique ont été déposées auprès de la CNCM, le 22 mars 2003, sous le n° CNCM I-2826 pour Aspergillus phoenicis, sous le n° CNCM I-2825 pour Galactomyces geotrichum, sous le n° CNCM 1-2824 pour Mucor hiemalis, sous le n° CNCM 1-2821 pour Fusarium equiseti, sous le n° CNCM 1-2823 pour Phoma sp., sous le n° CNCM 1-2822 pour Trichoderma viride, et le 27 mars 2003, sous le n° CNCM 1-2997 pour Penicillium chrysogenum, sous le n° CNCM 1-2996 pour Chaetomium globotosum et sous le n° CNCM I-2995 pour Paecilomyces variotii.

Ces différentes souches appartiennent à des groupes qui peuvent être définis et caractérisés comme suit :
- Aspergillus : Thalle à mycélium cloisonné portant de nombreux conidiophores dressés, non ramifiés, terminés en vésicules. Phialides formées directement sur la vésicule (têtes conidiennes unisériées) ou portées sur des métules ou stérigmates (têtes conidiennes bisériées). Conidies sèches, en chaînes divergentes ou associées en colonnes compactes, unicellulaires, globuleuses, sub-globuleuses ou elliptiques, lisses ou ornementées, hyalines ou pigmentées en jaune, brun, noir ou vert. Cellules à paroi épaissie (Hülle cells) et sclérotes parfois présents.
- Fusarium : Thalle à croissance généralement rapide, blanc à crème, jaune, brunâtre, rose, rouge, violet ou lilas. Conidiophores parfois très ramifiés formant sur le thalle des coussinets (sporodochies) et portant des masses de spores d'aspect graisseux. Phialides plus ou moins allongées pouvant produire deux types de conidies : des macroconidies fusiformes, souvent courbées, pluriseptées, avec une cellule basale pédicellée, portant une sorte de talon ; des microconidies petites, O-2-septées, piriformes, fusiformes ou ovoïdes (certaines espèces produisent les deux types de spores, d'autres ne forment que des macroconidies). Chlamydospores présentes ou absentes, terminales ou intercalaires, différenciées par le mycélium ou par les conidies.
- Geotrichum : Thalle à croissance rapide, mince, lisse, blanc, présentant un aspect de levure. Arthrospores cylindriques, arrondies aux extrémités, de taille variable, 6-25 x 3-9 µm.
- Mucor : Thalle siphoné, velouté ou floconneux, blanc, gris ou noir. Pas de stolons. Sporocystophores dressés, toujours terminés par un sporocyste, simples ou à ramification sympodiale, monopodiale ou mixte. Sporocystes globuleux, blancs ou un peu colorés, sans apophyse, pourvus d'une columelle, multisporés. Spores de forme variée, lisses ou granuleuses. Chlamydospores parfois présentes. Zygospores sans appendices sur les suspenseurs.
- Phoma : Sphaeropsidale à pycnides noires. Conidies unicellulaires, ovoïdes à elliptiques, produites sur des phialides, exsudées par l'ostiole où elles s'agglutinent en une mèche parfois très longue.
- Paecilomyces : Thalle blanc, rose, brun-jaune à brun-verdâtre mais jamais vert. Structure sporifères simples ou agrégées en synnémas constituées de conidiophores ramifiés portant des phialides de forme caractéristique, cylindriques ou renflées dans leur partie inférieure et s'atténuant brusquement en un long col étroit. Conidies unicellulaires, lisses ou échinulées, le plus souvent ovées, disposées en très longues chaînes basipétales, divergentes ou enchevêtrées. Chlamydospores à paroi épaisse, isolées ou en courtes chaînes, lisses ou ornementées, parfois absentes.
- Chaetomium : Périthèces ostiolés, noirs, à col court ou indistinct, garnis de nombreux poils simples ou ramifiés, raides, ondulés ou plus ou moins spiralés. Asques cylindriques ou claviformes, octosporés. Ascospores souvent émises en masse au sommet des périthèces, unicellulaires, noires, lisses, globuleuses, ovoïdes ou elliptiques, pourvues d'un ou de deux pores germinatifs. Le genre groupe une centaine d'espèces cellulolytiques d'un intérêt évident en raison d'une production de mycotoxines, des biodégradations qu'elles provoquent, de leur utilisation dans la transformation de la cellulose et la production de protéines.
- Penicillium : Thalle vert ou plus rarement blanc, dont la texture est souvent utilisée comme critère de détermination. Conidiophores isolés, groupés en faisceaux lâches ou agrégés en corémies bien définies, hyalins, lisses ou granuleux, simples ou ramifiés, terminés par un pénicille. Pénicilles constitués, suivant le cas, soit d'un simple verticille de phialides (monoverticillés), soit d'un verticille de ramification (métules) portant les phialides (biverticillés), soit de plusieurs verticilles successifs comportant des ramifications, des métules et des phialides (triverticillés, quadriverticillés, etc...). Les caractères des pénicilles servent à la différenciation des groupes et des espèces. Phialides ampulliformes ou lancéolées. Conidies disposées en longues chaînes, globuleuses, elliptiques, cylindriques ou fusiformes, lisses ou rugueuse, hyalines, grisâtres ou verdâtres. Sclérotes parfois présents. Certains Penicillium présentent une reproduction sexuée avec formation d'ascocarpes.
- Trichoderma : Thalle à croissance rapide, d'abord lisse puis plus ou moins floconneux, souvent zoné, blanc ou vert. Conidiophores en touffes plus ou moins compactes, très ramifiés, irrégulièrement verticillés avec des ramifications à angle droit. Phialides ovoïdes à ellipsoidales, atténuées au sommet, solitaires ou en groupe, généralement perpendiculaires à l'axe. Conidies réunies en glomérules au sommet des phialides, unicellulaires, parfois hyalines, le plus souvent vertes, lisses ou granuleuses. Clamydospores parfois présentes.

Les champignons sont des organismes Eucaryotes, sans chlorophylle et dont l'appareil végétatif, dépourvu de tige, de racine et de feuille est appelé thalle. Le thalle peut être unicellulaire, dissocié et bourgeonnant (levures) ou filamenteux (champignons filamenteux ou moisissures ou mycètes ou fungi), habituellement limité par une paroi rigide. Le nombre de champignons filamenteux est, à l'heure actuelle, estimé à environ 500 000 espèces connues et au moins autant à découvrir. Les champignons filamenteux (moisissures) se différencient des Procaryotes (bactéries) par le fait que leurs cellules sont généralement de taille supérieure, contenant un noyau, des vacuoles et des mitochondries, ce qui est d'ailleurs, spécifique aux cellules Eucaryotes. Les champignons sont incapables d'effectuer la photosynthèse et tirent leur énergie de l'oxydation des composés chimiques organiques. Ils sont immobiles à cause de la rigidité de leur paroi et ont une structure mycélienne constituée de filaments ramifiés, les hyphes, qui constituent le mycélium.

Les champignons ou mycètes vivent au dépend de la matière organique en décomposition, ce sont des saprophytes. Concernant les besoins nutritionnels : à la fois hétérotrophes vis-à-vis du carbone (micro-organismes qui ont un besoin nutritif obligatoire d'au moins une substance organique servant de source d'énergie) et dépourvus du pouvoir de phagocyter des substances solides (à la différence des animaux), les mycètes sont réduits à absorber des substances organiques et minérales dissoutes. Seules les petites molécules du substrat peuvent traverser la paroi, les grosses doivent être préalablement dégradées (les grosses molécules sont captées physiquement par absorption sur la biomasse). Fixés de façon extra-cellulaire, leurs produits d'hydrolyse générés sous l'action d'exo-enzymes peuvent ensuite pénétrer dans les cellules mêmes. Finalement, la transformation des matières organiques consiste en deux phénomènes associés :
- le transfert des matières finement particulaires et dissoutes vers une phase solide facilement séparable de l'eau.
- l'oxydation d'une partie des matières organiques ainsi transférée, avec comme produits finaux essentiellement CO₂ et de l'eau.

Dotés d'un arsenal enzymatique très varié, les champignons filamenteux sont capables de coloniser tous les milieux (colonisation de tous les substrats terrestres riches en matières organiques. Ce sont les plus importants détrivores de la biosphère. Ainsi ils sont naturellement présents dans le sol, l'air et l'eau) et sont capables pour certaines souches de tolérer des conditions extrêmes de pH (pH optimal 3,8 à 5,6 ; voire 9 pour certains), de températures de 0°C à plus de 40°C (température optimale, 22 à 30°C pour les saprophytes) et même de teneur en eau très faible.

Champignons ou mycètes présentent des aptitudes à réaliser certaines fonctions biochimiques de dégradation vis-à-vis des différents cycles biologiques des éléments illustrés dans le tableau suivant :

| **Niveau d'action** | **Réalisant la transformation** |
|---|---|
| Cycle du carbone | |
| Amylolytiques | des amidons |
| Pectinolytiques | des pectines |
| Hémicellulotyques | des hémicelluloses |
| Cellulolytiques | des celluloses |
| Lignolytiques | des lignines |
| Chitinolytiques | des chitines |

| Cycle de l'azote | |
|---|---|
| Fixateurs d'azote libre | de l'azote gazeux en composés cellulaires azotés |
| Protéolytiques | des protéines, polypeptides en acides aminés |
| Ammonificateurs | des acides aminés, de l'urée, des acides nucléiques, en ammoniac |
| Nitrificateurs | de l'ammoniac en nitrites puis en nitrates |
| Dénitrificateurs | des nitrates et nitrites en azote gazeux |

| Cycle du soufre | |
|---|---|
| Minéralisation du soufre | des molécules organiques soufrées en sulfates |

Ces réactions de bio-transformation de la matière organique sont dues à des productions de protéines spéciales par les champignons filamenteux : les enzymes, véritables biocatalyseurs de toutes les réactions biochimiques. Les principales activités enzymatiques figurent dans le tableau suivant :

| | |
|---|---|
| **1 - Hydrolases** | Dégradation d'une molécule du substrat par l'eau et fixation (-H et -OH) |
| | |
| Osidases : | Attaque des osides |
| - saccharase | saccharose -> glucose + fructose |
| - amylase | amidon -> dextrine + maltose |
| - cellulase | cellulose -> sucres simples + cellulodextrines |
| - pectinase | pectines -> ac. galacturonique + |
| - phosphatases | galactose alcool-phosphate -> alcool + phosphate |
| | |
| Amidases : | Destruction amide |
| - uréase | urée -> ammoniac |
| - asparaginase | asparagine -> ac. aspartique + ammoniac |
| | |
| Protéases | Protéines -> Acides aminés ou peptides |
| **2 - Transférases et isomérases** | Transfert des groupes ou des radicaux d'une molécule à une autre ou changement de configuration |
| **3 - Oxydo-réductases** | Oxydo-réduction |
| | |
| - oxydases et catalases | Réduction d'oxygène gazeux |
| - hydrogénases | |
| **4- Clastases ou Synthétases** | Rupture ou formation d'une liaison |

Grâce aux divers systèmes enzymatiques précédemment évoqués, les différents éléments organiques constitutifs des effluents agroalimentaires ou industriels peuvent donc être en grande partie assimilés et biodégradés. Grâce à ces propriétés métaboliques, une fraction de la charge organique polluante des effluents à traiter va être éliminée, par oxydation, principalement sous forme gazeuse (essentiellement du CO₂) et d'eau. Par conséquent, l'épuration par les mycètes ne génère aucune pollution secondaire. Grâce à des équipements enzymatiques particuliers et très complets, les mycètes sont aussi capables de décomposer en aérobiose, des composés chimiques traditionnellement réputés pour leurs biodégradabilités restreintes. Il s'agit par exemple, de produits pétroliers (gasoils, fuels, essences, kérosènes, huiles minérales, hydrocarbures aromatiques polycycliques et hydrocarbures volatils halogénés), de composés organiques halogénés (herbicides, fongicides et insecticides) ou agents phytosanitaires azotés et phosphorés (atrazine et simazine) et de l'industrie chimique de base (alcools, acides, esters, éthers...). L'attaque de la lignine et de ses dérivés est aussi possible.

L'inoculation des effluents par des champignons filamenteux assure la décomposition des molécules organiques en excès. En retour, la biodestruction de ces composés va éviter la formation de composés malodorants résiduels aussi bien au moment du stockage qu'au moment d'un épandage ou d'une irrigation éventuel. Ainsi, l'utilisation d'un inoculum fongique permet une élimination durable des nuisances olfactives, sans émission d'odeur post-traitement.

Le procédé selon l'invention permet une réduction de la charge polluante et des nuisances olfactives au sein des effluents agroalimentaires ou industriels.

La diminution de la charge polluante est caractérisée par les marqueurs physicochimiques suivants :
- D.C.O. ou Demande Chimique en Oxygène exprimée en milligramme d'oxygène par litre, représente la teneur totale de l'effluent en matières oxydables. Ce paramètre correspond à la quantité d'oxygène qu'il faut fournir pour oxyder ces matières, par voie chimique et dans des conditions opératoires définies.
- D.B.O. ou Demande Biochimique en Oxygène exprimée en milligramme d'oxygène par litre, représente la quantité de matières organiques biodégradables présentes dans l'eau. Ce paramètre mesure la quantité d'oxygène consommée par les micro-organismes pour réduire la fraction biodégradable en aérobiose à 20°C. Cette consommation peut être rattachée à une durée de 5 jours : il s'agit de la D.B.05.
- M.E.S. ou Matières en Suspension exprimées en gramme par litre, sont les polluants insolubles contenus dans l'eau. Elles comportent à la fois des éléments minéraux et organiques.
- M.V.S. ou Matières Volatiles en Suspension exprimées en gramme par litre, correspondent à la partie organique biodégradable des M.E.S.

La diminution des M.E.S. et des M.V.S. correspond à une diminution du volume des boues, c'est-à-dire une réduction par les mycètes d'une fraction de la matière organique issue de la lyse microbienne de la biomasse endogène formée dans les cuves de traitement des stations biologiques ou lors du lagunage.

Le procédé selon l'invention a montré son efficacité dans la réduction de la charge polluante ainsi que les nuisances olfactives d'effluents issus d'activités agroalimentaires (industrie de la viande, laiterie, fromagerie, distillerie, brasserie, féculerie, conserverie, blanchisserie, sucrerie) et industrielles (papeterie, cartonnerie, sidérurgie, textile et pétrochimie).

Le procédé selon l'invention permet également l'élimination de diverses matières organiques nocives tels que les hydrocarbures aromatiques polycycliques ou les composés organiques halogénés (herbicides, fongicides, insecticides et molécules utilisées dans l'industrie du traitement de surface).

Les procédés de préparation et de mise en oeuvre des inoculums fongiques sont illustrés par les exemples suivants :

### 1) Isolement des souches indigènes et mise en collection

Les isolements sont réalisés en trois étapes :

### 1^{ére} étape :

1 g (ou 1 ml) d'échantillon du milieu à traiter sont mis en solution ou en suspension dans 9 g de solution diluante (dilution 10⁻¹).
La solution diluante est de préférence une solution aqueuse, de 2 g de peptone de caséine, de 9 g de chlorure de sodium contenant 5 ml de Tween dans 1 litre d'eau déminéralisée qui est stérilisée préalablement à son utilisation par autoclavage pendant 15 à 20 minutes à 118-122°C.
La solution et/ou la suspension obtenue est homogénéisée par agitation.
Une série de dilutions successives sont effectuées de 10⁻¹ à 10⁻⁶ immédiatement après la mise en solution ou en suspension.
Des milieux de culture obtenus dans des boîtes de diamètre 100 mm sont inoculés avec 0,1 ml de dilution.
Les milieux de culture utilisés sont :
- PDA (Potato Dextrose Agar, Biokar Diagnostics, BK 095)
- YGC (Chloramphenicol Glucose Agar, Biokar Diagnostics, BK 007HA)
- Sabouraud + Chloramphénicol (Sabouraud Chloramphenicol Agar, Biokar Diagnostics, BK 027HA).
L'incubation est maintenue pendant 4 jours à 25°C.

### 2^{ème} étape :

Les colonies obtenues à l'étape 1 sont sélectionnées visuellement et prélevées.
Après prélèvement, ces colonies sont diluées dans la solution diluante (de 10⁻¹ à 10⁻⁶). Des milieux de culture identiques à ceux utilisés dans l'étape 1 sont inoculés avec 0,1 ml de solution obtenue précédemment.
L'incubation est maintenue pendant 4 jours à 25°C.

### 3^{ème} étape :

A partir de prélèvements dilués comme dans l'étape 2, des milieux de culture Sabouraud + Chloramphénicol sont inoculés par piqûre centrale et l'incubation est poursuivie.
On obtient des souches isolées qui sont ensuite mises en culture sur gélose inclinée (Slants sur Sabouraud) pendant 7 à 15 jours à 25°C.
La biomasse est diluée (9 ml de solution diluante par Slants) et « récoltée » à partir des géloses inclinées. Le mélange est passé au VORTEX et le surnageant obtenu peut être conditionné par addition à 1,4 ml de surnageant de 0,4 ml de glycérol stérile et congelé à - 80°C, dans des tubes cryogéniques permettant un stockage aisé des souches.

### 2) Préparation d'un inoculum industriel

Les inoculums industriels permettant de traiter de grands volumes d'effluents sont préparés à partir du contenu des tubes cryogéniques précédemment conditionnés, par dilution de ce contenu dans 1 à 5 l de milieu liquide de production. Ces milieux liquides de production sont des milieux classiques tels que milieux de CZAPEK ou de MOSSEL ou milieu malté.
Au bout de 4 à 7 jours, il y a un développement des souches et cette production peut être utilisée comme inoculum secondaire pour la production de centaines de litres d'inoculum industriel par dilution puis mise en culture des milieux liquides.
L'inoculum industriel finalement obtenu contient de 10⁴ à 10⁸ Thalles ou unités viables par ml selon les souches considérées.

### 3) Inoculation d'un milieu à traiter

L'inoculum est ajouté à raison de 10⁻³ à 10⁻² g d'inoculum industriel par g d'effluent à traiter. Cette inoculation se fait par déversement direct soit dans la lagune, soit dans la cuve selon le système de traitement sur place. Le temps du séjour minimum des champignons filamenteux dans l'effluent à traiter doit être de 4 jours.

## Revendications

1. Procédé d'amélioration des performances des systèmes épuratoires existants par réduction de la matière organique contenue dans des effluents agroalimentaires et industriels en transformant celle-ci en H₂O et CO_{2'} **caractérisé en ce qu'**il comporte :
a) une étape de caractérisation chimique de l'effluent,
b) une étape de sélection des souches de champignons filamenteux permettant de maintenir une population viable desdits champignons filamenteux dans les effluents,
c) une étape d'ensemencement du milieu par un inoculum fongique comprenant au moins une des souches de champignons filamenteux sélectionnée à l'étape b,
d) une étape de biodigestion par lesdits champignons filamenteux en culture libre en présence d'oxygène.

2. Procédé selon la revendication 1, **caractérisé en ce qu'**il permet en outre la dénitrification des effluents agroalimentaires et industriels par biodigestion par des champignons-filamenteux en culture libre en présence d'oxygène.

3. Procédé selon la revendication 1 ou 2 **caractérisé en ce qu'**il est continu.

4. Procédé selon l'une quelconque des revendications précédentes **caractérisé en ce que** les champignons filamenteux sont choisis parmi les espèces suivantes :
- Aspergillus phoenicis
- Chaetomium globotosum
- Galactomyces geotrichum
- Mucor hiemalis
- Paecilomyces variotii
- Fusarium equiseti
- Phoma sp.
- Trichoderma viride
- Penicillium chrysogenum

5. Procédé selon l'une quelconque des revendications précédentes **caractérisé en ce que** l'étape de biodigestion à une durée minimum de 4 jours.

## Claims

1. Process for improving the performance of existing purifying systems by reducing the organic matter present in food processing and industrial effluents by converting this organic matter into H₂O and CO₂, **characterized in that** it comprises:
a) a stage of chemical characterization of the effluent,
b) a stage of selecting the filamentous fungal strains which make it possible to maintain a viable population of the said filamentous fungi in the effluents,
c) a stage of inoculating the medium with a fungal inoculum comprising at least one of the filamentous fungal strains selected in stage b,
d) a stage of biodigestion by the said filamentous fungi in free culture in the presence of oxygen.

2. Process according to Claim 1, **characterized in that** it additionally makes possible the denitrification of food processing and industrial effluents by biodigestion by filamentous fungi in free culture in the presence of oxygen.

3. Process according to Claim 1 or 2, **characterized in that** it is continuous.

4. Process according to any one of the preceding claims, **characterized in that** the filamentous fungi are chosen from the following species:
- Aspergillus phoenicis
- Chaetomium globotosum
- Galactomyces geotrichum
- Mucor hiemalis
- Paecilomyces variotii
- Fusarium equiseti
- Phoma sp.
- Trichoderma viride
- Penicillium chrysogenum

5. Process according to any one of the preceding claims, **characterized in that** the biodigestion stage has a minimum duration of 4 days.

## Patentansprüche

1. Verfahren zur Verbesserung der Leistungsfähigkeit von existierenden Reinigungssystemen durch Verringerung des Gehalts an organischen Substanzen in Abwässern aus der Landwirtschafts- und Lebensmittelindustrie **dadurch**, daß man diese in H₂O und CO₂ umwandelt, **dadurch gekennzeichnet, daß** das Verfahren folgendes umfaßt:
a) einen Schritt, in dem das Abwasser chemisch näher bestimmt wird,
b) einen Schritt der Auswahl von Fadenpilzstämmen, die es gestattet, eine lebensfähige Population dieser Fadenpilze in den Abwässern aufrechtzuerhalten,
c) einen Schritt, in dem das Medium mit einem Pilzinokulum, umfassend mindestens einen der in Schritt b ausgewählten Fadenpilzstämme, inokuliert wird,
d) einen Schritt des biologischen Abbaus durch diese Fadenpilze in freier Kultur in Gegenwart von Sauerstoff.

2. Verfahren nach Anspruch 1, **dadurch gekennzeichnet, daß** es weiterhin die Denitrifikation von Abwassern aus der Landwirtschafts- und Lebensmittelindustrie durch biologischen Abbau durch Fadenpilze in freier Kultur in Gegenwart von Sauerstoff gestattet.

3. Verfahren nach Anspruch 1 oder 2, **dadurch gekennzeichnet, daß** es kontinuierlich ist.

4. Verfahren nach einem der vorhergehenden Ansprüche, **dadurch gekennzeichnet, daß** die Fadenpilze aus der Reihe der folgenden Arten ausgewählt werden:
- Aspergillus phoenicis
- Chaetomium globotosum
- Galactomyces geotrichum
- Mucor hiemalis
- Paecilomyces variotii
- Fusarium equiseti
- Phoma sp.
- Trichoderma viride
- Penicillium chrysogenum.

5. Verfahren nach einem der vorhergehenden Ansprüche, **dadurch gekennzeichnet, daß** der biologische Abbauschritt mindestens 4 Tage lang dauert.
